(19) Europäisches Patentamt
European Patent Office
Office européen des brevets

(11) **EP 2 738 406 A1**

(12) **EUROPEAN PATENT APPLICATION**

(43) Date of publication:
**04.06.2014  Bulletin 2014/23**

(51) Int Cl.:
**F16C 32/04** (2006.01)

(21) Application number: **13193908.4**

(22) Date of filing: **21.11.2013**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **29.11.2012  US 201213689249** | (71) Applicant: **General Electric Company**<br>**Schenectady, New York 12345 (US)**<br><br>(72) Inventor: **Kammer, Leonardo Cesar**<br>**Niskayuna, NY New York 12309 (US)**<br><br>(74) Representative: **Serjeants LLP**<br>**25 The Crescent**<br>**King Street**<br>**Leicester, LE1 6RX (GB)** |

(54) **Magnetic Bearing Systems and Methods of Controlling the Same**

(57)   A magnetic bearing system (100) includes a first electromagnet (104), a second electromagnet (106) opposing the first electromagnet, and a rotor (102) positioned between the first and second electromagnets. The first and second electromagnets are configured to apply a magnetic force. The system also includes a controller (110) configured to determine a control action necessary to move the rotor to a predetermined rotor setpoint. The system further includes a nonlinear compensation device (112) configured to calculate a first electrical current setpoint for the first electromagnet and a second electrical current setpoint for the second electromagnet to maintain a predetermined stiffness during at least one of startup, operation, and shutdown of the magnetic bearing system. The first and second electrical current setpoints are calculated based on the control action determined by the controller.

FIG. 1

**EP 2 738 406 A1**

## Description

BACKGROUND

The embodiments described herein relate generally to magnetic bearing systems and, more specifically, to nonlinear compensation of magnetic bearing systems.

Active magnetic bearing systems are used in rotating mechanical systems for providing non-contact operation support of a rotating piece within a mechanical system. The non-contact feature of active magnetic bearings provides decreased rotational resistance on the rotor and reduced wear on the rotating system, leading to increased efficiency and rotating system component life.

At least some known active magnetic bearing systems include at least one pair of actuators, or electromagnets, position sensors, and a controller. The position sensors detect a position of the rotor, or actual air gap distance, relative to the actuators. The air gap distance is communicated as a signal to the controller, which compares the actual air gap distance to a preferred air gap distance ("preferred operational setpoint") for operation of the rotor. The controller then emits an excitation current relating to a change in bearing current necessary to return the rotor to the preferred operational setpoint.

Such known active magnetic bearing systems typically utilize a pair of actuators that operate relative to one another. More specifically, as current and force in a first actuator is increased, current and force in a second actuator is decreased by a substantially similar amount. A nonlinear relationship is created between the magnetic force exerted on the rotor and the excitation current of the actuators. Such a nonlinear relationship causes these known systems to behave differently during startup and/or shutdown, as compared to the continuous operation at the preferred operational setpoint of the air gap distance. Moreover, the regular startup routine may include slow ramping of the levitation distance up to the maximum available air gap in order to calibrate the system and assess the remaining life of the landing bearings. Such a procedure crosses through a significant range of operating points having very distinct behaviors.

To counteract the nonlinear behaviors of the different operating points, at least some known systems use a bias current strategy to partially reduce the nonlinear behavior of the active magnetic bearings at a point of steady operation. Such bias current strategies often fail to reduce the nonlinearity during startup and shutdown procedures. Furthermore, such strategies lack efficiency in that the two opposing actuators constantly require current to create the opposing force necessary to move the rotor to the setpoint, resulting in wasted energy.

BRIEF DESCRIPTION

In one aspect, a magnetic bearing system is provided. The magnetic bearing system includes a first electromagnet, a second electromagnet opposing the first electromagnet, and a rotor positioned between the first and second electromagnets. The first and second electromagnets are configured to apply a magnetic force. The system also includes a controller configured to determine a control action necessary to move the rotor to a predetermined rotor setpoint. The system further includes a nonlinear compensation device configured to calculate a first electrical current setpoint for the first electromagnet and a second electrical current setpoint for the second electromagnet to maintain a predetermined stiffness during at least one of startup, operation, and shutdown of the magnetic bearing system. The first and second electrical current setpoints are calculated based on the control action determined by the controller.

In another aspect, a method is provided for controlling a magnetic bearing system, wherein the magnetic bearing system includes a rotor positioned between opposing first second electromagnets, a controller, and a nonlinear compensation device. The method includes measuring an air gap distance between the first and second electromagnets and the rotor. The method also includes calculating, using the nonlinear compensation device, a first electrical current setpoint for the first electromagnet and a second electrical current setpoint for the second electromagnet to maintain a predetermined stiffness during at least one of startup, operation, and shutdown of the magnetic bearing system. The method further includes applying the first electrical current setpoint to the first electromagnet and the second electrical current setpoint to the second electromagnet.

In yet another aspect, a nonlinear compensation device is provided for use in a magnetic bearing system. The nonlinear compensation device is configured to calculate a first electrical current setpoint for a first electromagnet and a second electrical current setpoint for a second electromagnet to maintain a predetermined stiffness during at least one of startup, operation, and shutdown of the magnetic bearing system. The first and second electrical current setpoints are calculated based on a control action necessary to move a rotor to a predetermined rotor setpoint determined by a controller.

DRAWINGS

These and other features, aspects, and advantages of the present invention will become better understood when the following detailed description is read with reference to the accompanying drawings in which like characters represent like parts throughout the drawings, wherein:

FIG. 1 illustrates a simplified block diagram of an exemplary magnetic bearing system.

FIG. 2 is a flowchart of an exemplary method of controlling a magnetic bearing system.

Unless otherwise indicated, the drawings provided herein are meant to illustrate key inventive features of the invention. These key inventive features are believed to be applicable in a wide variety of systems comprising one or more embodiments of the invention. As such, the drawings are not meant to include all conventional features known by those of ordinary skill in the art to be required for the practice of the invention.

DETAILED DESCRIPTION

In the following specification and the claims, reference will be made to a number of terms, which shall be defined to have the following meanings.

The singular forms "a", "an", and "the" include plural references unless the context clearly dictates otherwise.

"Optional" or "optionally" means that the subsequently described event or circumstance may or may not occur, and that the description includes instances where the event occurs and instances where it does not.

Approximating language, as used herein throughout the specification and claims, may be applied to modify any quantitative representation that could permissibly vary without resulting in a change in the basic function to which it is related. Accordingly, a value modified by a term or terms, such as "about" and "substantially", are not to be limited to the precise value specified. In at least some instances, the approximating language may correspond to the precision of an instrument for measuring the value. Here and throughout the specification and claims, range limitations may be combined and/or interchanged, such ranges are identified and include all the sub-ranges contained therein unless context or language indicates otherwise.

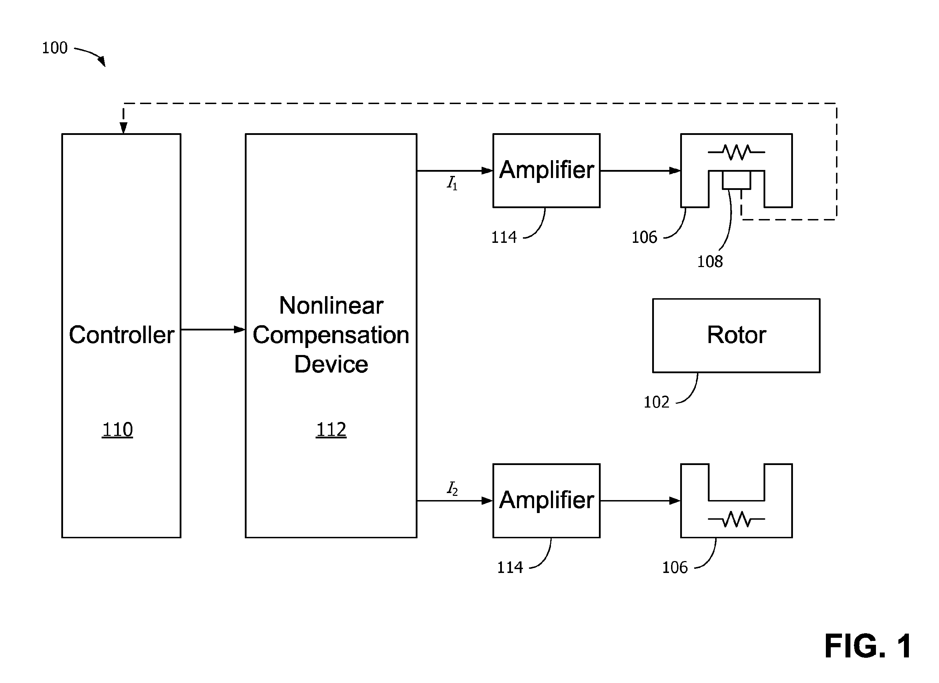

FIG. 1 illustrates a simplified block diagram of an exemplary active magnetic bearing system 100. Magnetic bearing system 100 may be implemented on a rotating machine (not shown) having a rotating element, such as a rotor 102. Examples of such rotating machines include, but are not limited to, compressors, blowers, pumps, turbines, motors, and generators. In the exemplary embodiment, magnetic bearing system 100 includes a first electromagnet 104 and a second electromagnet 106 positioned on opposite sides of rotor 102 for supporting rotor 102 in a non-contact, levitating state. System 100 also includes at least one position sensor 108 coupled to one of electromagnets 104 and 106 for determining the air gap distance between rotor 102 and electromagnet 104 or 106. A total gap distance is known, enabling the air gap distance of electromagnet 104 or 106 without position sensor 108 to be calculated by subtracting the measured gap distance from the total gap distance. System 100 further includes a controller 110 communicatively coupled to receive a signal representing air gap distance that is transmitted by position sensor 108 and a nonlinear compensation device 112 communicatively coupled to controller 110 and to electromagnets 104 and 106 for calculating current levels to provide to electromagnets 104 and 106 to maintain a predetermined negative stiffness. In an alternative embodiment, nonlinear compensation device 112 may be embedded in controller 110. The predetermined negative stiffness is maintained during at least one of startup, operation, and shutdown of system 100. The current signals determined by nonlinear compensation device 112 are generated through power amplifiers 114 and are applied to electromagnets 104 and 106. In an alternative embodiment, each of electromagnets 104 and 106 may be a hybrid configuration that includes a permanent magnet and electromagnet combination.

In the exemplary embodiment, position sensor 108 is configured to transmit information about the position of rotor 102 to controller 110, typically in the form of an electrical voltage. Normally, position sensor 108 is calibrated so that the when rotor 102 is at the desired setpoint, position sensor 108 produces a null voltage. When the rotor 102 is moved above this desired setpoint, a positive voltage is produced and when it is moved below, a negative voltage results. In an alternate embodiment, system 100 may implement a sensorless bearing, wherein displacement of rotor 102 is detected by measuring a change of inductance of one of electromagnets 104 and 106.

In the exemplary embodiment, controller 110 and nonlinear compensation device 112 each include and/or are implemented by at least one processor. As used herein, the processor includes any suitable programmable circuit such as, without limitation, one or more systems and microcontrollers, microprocessors, reduced instruction set circuits (RISC), application specific integrated circuits (ASIC), programmable logic circuits (PLC), field programmable gate arrays (FPGA), and/or any other circuit capable of executing the functions described herein. The above examples are exemplary only, and thus are not intended to limit in any way the definition and/or meaning of the term "processor."

In the exemplary embodiment, controller 110 receives air gap distances transmitted by position sensor 108. Such air gap distance relates to the distance between first electromagnet 104 and rotor 102, and second electromagnet 106 and rotor 102. Controller 110 compares the air gap distances to predetermined setpoints for air gap distance. In the exemplary embodiment, controller 110 then generates a control action signal based on the comparison. The control action represents a force necessary to position rotor 102 back to the predetermined setpoint. Upon determining the control action, controller 110 transmits the control action signal to nonlinear compensation device 112.

In the exemplary embodiment, nonlinear compensation device 112 is configured to provide compensation for the nonlinearity of electromagnets 104 and 106. More specifically, in the exemplary embodiment, nonlinear compensation device 112 is configured to maintain the predetermined negative stiffness of electromagnets 104 and 106 at a constant level. To maintain a constant negative stiffness, nonlinear compensation device 112 balances the attractive force placed on rotor 102 by controlling the current to each of electromagnets 104 and 106. As previously discussed, the amount of force necessary is transmitted to nonlinear compensation device 112 by controller 110. A desired level of negative stiffness is also provided to nonlinear compensation device 112. The level of negative stiffness is separately specified for each application or system. Knowing the force needed and the negative stiffness desired, current levels in electromagnets 104 and 106 are determined by equations $f = k \left[ \frac{I_1^2}{(l_s - l_2)^2} - \frac{I_2^2}{l_2^2} \right]$ and $\frac{\partial f}{\partial l_2} = k_x = 2k \left[ \frac{I_1^2}{(l_s - l_2)^3} + \frac{I_2^2}{l_2^3} \right]$,

where $f$ is the force calculated by controller 110, $k_x$ is the desired negative stiffness, k is a constant that depends on the gap surface area and on the number of turns in the magnet coils, h and $I_2$ are the currents to be calculated for electromagnets 104 and 106, respectively, $l_2$ is the air gap distance for one of electromagnets 104 or 106, and $l_s$ is a known sum of the gap lengths of electromagnets 104 and 106. h and $I_2$ are the two unknown variables that need to be determined from the two equations above. Through calculation, values for $I_1$ and $I_2$ may be obtained: $I_1^2 = \frac{(l_s - l_2)^3 (2f + k_x l_2)}{2k l_s}$

and $I_2^2 = \frac{l_2^3 [k_x (l_s - l_2) - 2f]}{2k l_s}$. This solution is unique if one considers $f$ as the control variable.

In the exemplary embodiment, $I_1$ and $I_2$ have minimum and maximum operational limits before becoming saturated. A minimum current limit $I_{min}$ is 0 A. A maximum current limit $I_{max}$ depends on the capability of the power electronics and the wire diameter in which the current flows. If the value of either $I_1$ or $I_2$ exceeds its operational limit and becomes saturated, then in the above equations, the saturated current is set at its limit, which leaves one unknown variable to solve two equations. In this case, the non-saturated current is calculated to satisfy the equation for force $f$. Under this condition, stiffness $k_x$ cannot be enforced to a constant value.

Upon calculating values for $I_1$ and $I_2$, nonlinear compensation device 112 transmits current control signals $I_1$ and $I_2$ for electromagnets 104 and 106, respectively.

In the exemplary embodiment, current control signals h and $I_2$ pass through power amplifiers 114 to provide current to electromagnets 104 and 106, and to provide an attractive force to correct the position of rotor 102 along each electromagnet 104 and 106. In some embodiments, power amplifiers 114 are simply voltage switches that are turned on and off at a high frequency, as commanded by a pulse width modulation (PWM) signal from controller 110.

In the exemplary embodiment, active magnetic bearing system 100 operates as a closed-loop system. Further, in the exemplary embodiment, the predetermined stiffness is negative and is an open-loop characteristic of system 100. Nonlinear compensation device 112 alters the overall stiffness of system 100 to a positive value and stabilizes overall behavior of the magnetic bearings. System 100 may have a sample rate anywhere between 2,000 to 100,000 times per second, which may also be referred to as having a sample rate frequency between 2 kHz and 100 kHz.

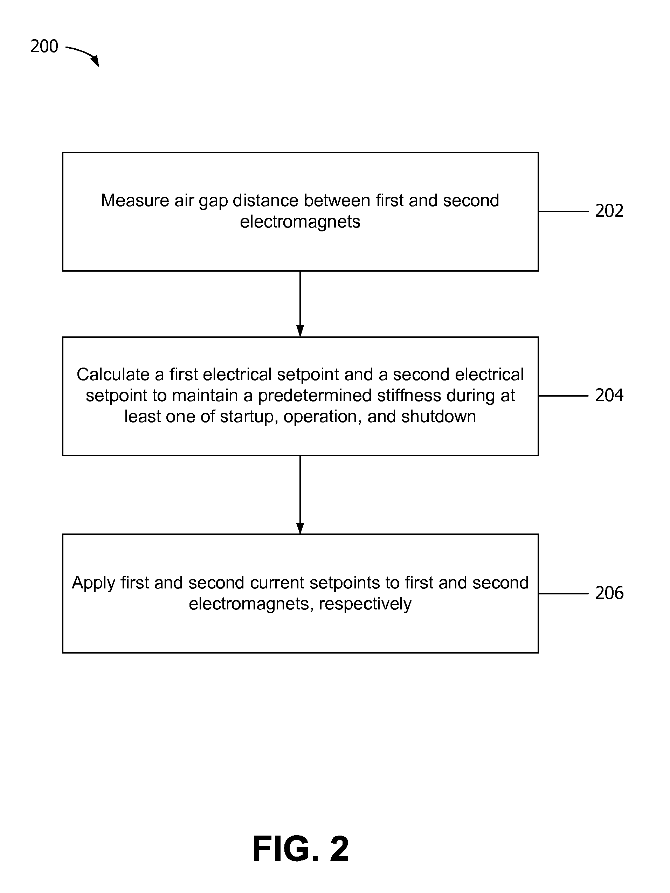

FIG. 2 is a flowchart of an exemplary method 200 of controlling a magnetic bearing system. In the exemplary embodiment, the magnetic bearing system includes a rotor positioned between opposing first and second electromagnets, a controller, and a nonlinear compensation device.

In the exemplary embodiment, the method includes measuring 202 an air gap distance between the first and second electromagnets and the rotor. Based on the air gap distance, the controller may determine a control action necessary to move the rotor to a predetermined rotor setpoint. In some embodiments, the control action may be a force necessary to move the rotor to a predetermined rotor setpoint.

In the exemplary embodiment, the method also includes calculating 204, using the nonlinear compensation device, a first electrical current setpoint for the first electromagnet and a second electrical current setpoint for the second electromagnet to maintain constant stiffness at all operating points of the magnetic bearing system. In one embodiment, the nonlinear compensation device creates a substantially constant resultant stiffness of the first and second electromagnets independent of the air gap distance between the first and second electromagnets and the rotor. In another embodiment, the nonlinear compensation device creates a linear relation between the control action output by the controller and a magnetic force applied to the rotor. In yet another embodiment, the nonlinear compensation device maintains a constant actuation gain at all operating points of the magnetic bearing system using the nonlinear compensation device.

The method further includes applying 206 the first electrical current setpoint to the first electromagnet and the second electrical current setpoint to the second electromagnet.

The embodiments described herein enable nonlinear compensation of magnetic bearings over either a completely linear range of operation or a significantly reduced nonlinear region of operation, depending on electromagnet capability. Additionally, the nonlinear compensation device enables higher performance in operating a rotor by requiring less robustness to control nonlinear behaviors present in magnetic bearing systems. Furthermore, the linear behavior at all, or nearly all, operating regions enables faster commissioning time in moving safely through numerous operating points and assessing physical properties of the magnetic bearing system.

An exemplary technical effect of the methods, systems, and apparatus described herein includes at least one of: (a) achieving higher performance in operating a rotor in a magnetic bearing system; and (b) enabling faster commissioning time in moving safely through numerous operating points and assessing physical properties of the magnetic bearing system.

Exemplary embodiments of magnetic bearing systems are described above in detail. The magnetic bearing systems and methods of controlling the same are not limited to the specific embodiments described herein, but rather, components of systems and/or steps of the methods may be utilized independently and separately from other components and/or steps described herein. For example, the methods may also be used in combination with other magnetic bearing systems and methods, and are not limited to practice with only the magnetic bearing systems and methods of controlling the same, as is described herein. Rather, the exemplary embodiments can be implemented and utilized in connection with many magnetic bearing system applications.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

**Claims**

1. A magnetic bearing system (100) comprising:

   a first electromagnet (104) and a second electromagnet (106) opposing said first electromagnet, said first and second electromagnets configured to apply a magnetic force;
   a rotor (102) positioned between said first electromagnet and said second electromagnet;
   a controller (110) configured to determine a control action necessary to move said rotor to a predetermined rotor setpoint; and
   a nonlinear compensation device (112) configured to calculate a first electrical current setpoint for said first electromagnet and a second electrical current setpoint for said second electromagnet to maintain a predetermined stiffness during at least one of startup, operation, and shutdown of said magnetic bearing system, wherein said first and second electrical current setpoints are calculated based on the control action determined by said controller.

2. A magnetic bearing system (100) in accordance with claim 1, wherein said nonlinear compensation device (112) creates a substantially constant resultant stiffness of said first and second electromagnets independent of an air gap distance between said first and second electromagnets and said rotor (102).

3. A magnetic bearing system (100) in accordance with claim 1 or claim 2, wherein said nonlinear compensation device (112) creates a linear relation between the control action determined by said controller (110) and the magnetic force applied to said rotor (102).

4. A magnetic bearing system (100) in accordance with any preceding claim, wherein the control action comprises a magnetic force necessary to move said rotor (102) to a predetermined setpoint.

5. A magnetic bearing system (100) in accordance with any preceding claim, wherein the control action comprises a current necessary to move said rotor (102) to a predetermined setpoint.

6. A magnetic bearing system (100) in accordance with any preceding claim, further comprising at least one position sensor (108) coupled to each of said first and second electromagnets, said at least one position sensor configured to transmit rotor (102) position information relative to at least one of said first and second electromagnets to said controller (110).

7. A magnetic bearing system (100) in accordance with any preceding claim, wherein said controller (110) measures a position of said rotor (102) by measuring (202) a change of inductance of at least one of said first and second electromagnets.

8. A magnetic bearing system (100) in accordance with any preceding claim, wherein said nonlinear compensation device (112) is configured to maintain a substantially constant actuation gain during at least one of startup, operation, and shutdown of said magnetic bearing system.

9. A magnetic bearing system (100) in accordance with any preceding claim, wherein said nonlinear compensation device (112) is further configured to calculate a first electrical current setpoint for said first electromagnet (104) and a second electrical current setpoint for said second electromagnet (106) to maintain stiffness during steady state operation of said magnetic bearing system.

10. A magnetic bearing system (100) in accordance with any preceding claim, wherein said rotor (102) is installed in one of a compressor, a blower, a pump, a turbine, a motor, and a generator.

**FIG. 1**

200 ⟍

```
┌─────────────────────────────────────────────┐
│                                             │
│   Measure air gap distance between first    │
│   and second                                │── 202
│   electromagnets                            │
│                                             │
└─────────────────────────────────────────────┘
                      │
                      ▼
┌─────────────────────────────────────────────┐
│                                             │
│   Calculate a first electrical setpoint     │
│   and a second electrical                   │
│   setpoint to maintain a predetermined      │── 204
│   stiffness during at                       │
│   least one of startup, operation, and      │
│   shutdown                                  │
│                                             │
└─────────────────────────────────────────────┘
                      │
                      ▼
┌─────────────────────────────────────────────┐
│                                             │
│                                             │
│   Apply first and second current setpoints  │
│   to first and second                       │── 206
│   electromagnets, respectively              │
│                                             │
└─────────────────────────────────────────────┘
```

# FIG. 2

**EUROPEAN SEARCH REPORT**

Application Number

EP 13 19 3908

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2002 174238 A (SEIKO INSTR INC) 21 June 2002 (2002-06-21) * abstract; figures * | 1-10 | INV. F16C32/04 |
| X | EP 0 473 232 A1 (PHILIPS NV [NL]) 4 March 1992 (1992-03-04) * column 1, line 1 - column 4, line 25; figures * | 1,4-6, 8-10 | |
| A | EP 1 498 625 A2 (EBARA CORP [JP]) 19 January 2005 (2005-01-19) * paragraph [0005] - paragraph [0036]; figures * | 1-10 | |
| A | JP H04 272506 A (SHIMADZU CORP) 29 September 1992 (1992-09-29) * abstract; figures * | 1-10 | |
| A | US 6 590 366 B1 (BROWNING DOUGLAS ROY [US] ET AL) 8 July 2003 (2003-07-08) * column 1, line 14 - column 4, line 54; figures * | 1-10 | TECHNICAL FIELDS SEARCHED (IPC) F16C |
| A | US 5 093 754 A (KAWASHIMA TOSHIAKI [JP]) 3 March 1992 (1992-03-03) * column 1, line 13 - column 2, line 9; figures * | 1-10 | |
| A | US 2003/038552 A1 (SETIAWAN JOGA DHARMA [US] ET AL) 27 February 2003 (2003-02-27) * paragraph [0005] - paragraph [0033]; figures * | 1-10 | |

The present search report has been drawn up for all claims

| Place of search | Date of completion of the search | Examiner |
|---|---|---|
| The Hague | 17 February 2014 | Daehnhardt, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**
**ON EUROPEAN PATENT APPLICATION NO.**                    EP 13 19 3908

This annex lists the patent family members relating to the patent documents cited in the above-mentioned European search report.
The members are as contained in the European Patent Office EDP file on
The European Patent Office is in no way liable for these particulars which are merely given for the purpose of information.

17-02-2014

| Patent document cited in search report | | Publication date | Patent family member(s) | | Publication date |
|---|---|---|---|---|---|
| JP 2002174238 | A | 21-06-2002 | NONE | | |
| EP 0473232 | A1 | 04-03-1992 | EP | 0473232 A1 | 04-03-1992 |
| | | | JP | H04245406 A | 02-09-1992 |
| | | | NL | 9001908 A | 16-03-1992 |
| | | | US | 5227948 A | 13-07-1993 |
| EP 1498625 | A2 | 19-01-2005 | EP | 1498625 A2 | 19-01-2005 |
| | | | JP | 4476694 B2 | 09-06-2010 |
| | | | JP | 2005036973 A | 10-02-2005 |
| | | | US | 2004263011 A1 | 30-12-2004 |
| JP H04272506 | A | 29-09-1992 | JP | 3136621 B2 | 19-02-2001 |
| | | | JP | H04272506 A | 29-09-1992 |
| US 6590366 | B1 | 08-07-2003 | US | 6590366 B1 | 08-07-2003 |
| | | | US | 2003201684 A1 | 30-10-2003 |
| US 5093754 | A | 03-03-1992 | JP | 2700904 B2 | 21-01-1998 |
| | | | JP | H02107815 A | 19-04-1990 |
| | | | US | 5093754 A | 03-03-1992 |
| US 2003038552 | A1 | 27-02-2003 | AU | 8545701 A | 04-03-2002 |
| | | | US | 2003038552 A1 | 27-02-2003 |
| | | | WO | 0216792 A1 | 28-02-2002 |

EPO FORM P0459

For more details about this annex : see Official Journal of the European Patent Office, No. 12/82